# EUROPÄISCHE PATENTANMELDUNG

(11) **EP 2 369 065 A1**
(43) Veröffentlichungstag der Anmeldung: **28.09.2011**
(21) Anmeldenummer: 11002540.0
(22) Anmeldetag: 28.03.2011
(51) Int. Cl.: E02F 9/02, E02F 9/08

(54) **Selbstfahrende Arbeitsmaschine, insbesondere Radbagger**

(30) Priorität: 26.03.2010 DE 202010004301 U
(71) Anmelder: Burkhardt, Johann, 87656 Germeringen (DE); Leinsle, Xaver, 87640 Biessenhofen (DE)
(72) Erfinder: Burkhardt, Johann, 87656 Germeringen (DE); Leinsle, Xaver, 87640 Biessenhofen (DE)
(74) Vertreter: Fiener, Josef

(57) **Zusammenfassung**

Zur Verminderung von Traktionsproblemen einer selbstfahrenden Arbeitsmaschine, insbesondere Radbagger, mit einem Unterwagen (1) und wenigstens zwei Achsen (2), wovon wenigstens eine lenkbar ist, wird vorgeschlagen, dass mindestens eine Zusatzachse (3) benachbart zu einer der Achsen (2) unter Bildung wenigstens eines Halbraupen-Fahrwerks (9) vorgesehen ist.
Bevorzugt wird zur Kostenreduzierung die Zusatzachse (3) an einem Hubwerk (4) zur Schildabstützung angeordnet, insbesondere mittels einer Konsole (4').

## Beschreibung

Die Erfindung betrifft eine selbstfahrende Arbeitsmaschine, insbesondere einen Radbagger, mit den oberbegrifflichen Merkmalen des Anspruchs 1.

Ein derartiger Radbagger ist beispielsweise in der DE 20 2007 016 894 U1 dargestellt. Solche Radbagger, die auch als Kran zum Heben von Gegenständen verwendet werden können, weisen meist eine sog. Schildabstützung auf, die in der genannten Druckschrift rechts benachbart zu einer Achse, im Allgemeinen an der Starrachse, mit einem Hubwerk am Unterwagen befestigt ist. Das Schild kann hydraulisch abgesenkt werden, um somit die Arbeitsmaschine gegen den Erdboden abzustützen, insbesondere bei großen Lasten bzw. Auslegeweiten.

Gewöhnlich werden Fahrwerke von selbstfahrenden Arbeitsmaschinen mit vier Rädern konstruiert, wobei zumeist die hinteren Räder angetrieben und die vorderen Räder lenkbar sind. Die zunehmend längeren Auslegerarme und damit einhergehend die Masse der Arbeitsmaschinen haben jedoch auf die Bodenverdichtung und Traktion der Maschinen einen negativen Einfluss. So werden heute selbstfahrende Arbeitsmaschinen häufig mit Allradantrieb versehen, um eine ausreichende Traktion zu gewährleisten. Um der zunehmenden Bodenverdichtung zu begegnen, setzt man zunehmend Breitreifen oder Zwillingsreifen ein.

Es ist jedoch schwierig, mit einem Reifenfahrwerk eine ausreichende Balance eines Radbaggers zu erreichen, da beim Betrieb aufgrund des ausladenden Auslegers der Schwerpunkt der Maschine ohnehin weit vorne (bezogen zum Arbeitsbereich) liegt, zusätzlich aber durch die Lastaufnahme oder Arbeit der Baggerschaufel der Schwerpunkt der Maschine noch weiter wandern kann, so dass oft zusätzliche Stützpratzen nötig sind. Arbeitet der Radbagger oder Kran in Hanglagen, muss eine Seite des Fahrwerks einen größeren Teil der Stützkräfte übertragen, so dass die Probleme der Balance, Traktion und Bodenverdichtung, insbesondere auf Waldboden zusätzlich verschärft werden.

Bei besonders feuchten Bodenverhältnissen wie z. B. auf moorigen Böden werden daher anstelle der Antriebsräder oft sog. kurze Halbraupen eingesetzt. Seltener wird auch das komplette Radfahrwerk durch ein Vollraupensystem ersetzt, da die Vollraupen hohe Kosten verursachen. Auch die bekannten Halbraupenfahrwerke an der Antriebsachse haben sich aufgrund relativ hoher Kosten und erheblichem Umrüstaufwand nicht weiter verbreiten können. Zwar lassen sich Fahrkomfort und -geschwindigkeit neuerdings durch Verwendung von Gummilaufbändern anstelle der bisher verwandten Stahlketten erhöhen. Insbesondere die Straßenfahrt bereitet jedoch durch hohen Verschleiß immer wieder Probleme, da die Ketten oder Gummilaufbänder bei Kurvenfahrt auf Scherung beansprucht werden.

Aufgabe der vorliegenden Erfindung ist es daher, die vorstehend genannten Nachteile bei einer Arbeitsmaschine zu vermeiden, insbesondere bei einem Radbagger die Traktions- und Bodenverdichtungsprobleme bekannter Fahrwerke zu vermindern, ohne allzu hohe zusätzliche Kosten zu verursachen.

Diese Aufgabe wird durch die Merkmale des Anspruchs 1 gelöst. Bevorzugte Weiterbildungen sind Gegenstand der Unteransprüche.

Dabei ist die Anordnung von zwei Halbraupen an der Starrachse bevorzugt, um bei einem in der vorderen Maschinenhälfte liegenden Schwerpunkt eine ausreichende Kipp- und/oder Seitenstabilität zu gewährleisten. Aufgrund der vor allem in Längsrichtung der Maschine (bezogen zum jeweiligen Arbeitsbereich, also einer Baggerstelle oder einem Lastaufnahmepunkt) vergrößerten Aufstandsfläche verringert sich die Empfindlichkeit gegen Schwerpunktverlagerungen. Ein weiterer Vorteil einer verlängerten Aufstandsfläche ist darin zu sehen, dass die selbstfahrende Arbeitsmaschine geringer um die Querachse schwankt und dementsprechend automatische Höhenregelungen für Vorsatzgeräte (Baggerschaufel, Kranzange etc.) durch Regelvorgänge weniger belastet werden. Ist keine automatische Höhenregelung vorhanden, wird der Fahrer entlastet, da er weniger auf die optimale Höhenführung des Vorsatzgerätes achten muss. Durch diese Verwendung von Halbraupen wird die Standsicherheit von Arbeitsmaschinen somit erheblich verbessert.

Die im Vergleich zu den Reifen um ein Vielfaches vergrößerte Aufstandsfläche der Halbraupen verursacht eine deutlich verringerte Bodenverdichtung, insbesondere bei der Holzfällung bzw. -rückung. Gleichzeitig können die Halbraupen aufgrund der größeren Aufstandsfläche höhere Zugkräfte übertragen. Das beschriebene Fahrwerk kann die erwünschten Vorteile kostengünstiger als die bisher bekannten Raupenfahrwerke verwirklichen, da bereits vorhandene Maschinenteile, wie Reifen, insbesondere Zwillingsreifen und das Hubwerk für die Schildabstützung für dieses Konzept verwendet werden können. Mit diesem Hubwerk können im Auslegerbetrieb die Halbraupen mit hoher Kraft gegen den Boden gedrückt werden, so dass sich eine hohe Abstützkraft ergibt. Wenn die Hydraulikzylinder mit einem Stickstoffspeicher ausgerüstet sind, kann das Hubwerk auch als Federung für die Zusatzachse dienen.

Zudem kann mit diesem Hubwerk, insbesondere mit zwei in Höhenrichtung wirkenden Hydraulikzylindern die Zusatzachse und damit die darum umlaufenden Raupenketten bzw. Raupenbänder in Fahrtposition schnell angehoben werden, so dass deren Aufstandsfläche etwa auf die der Räder der (starren) Antriebsachse reduziert ist. Hierdurch wird der Verschleiß erheblich vermindert, da bei Kurvenfahrt wenig Abrieb auftritt.

Weiterhin weist das Halbraupen-Fahrwerk bevorzugt je eine Verstelleinrichtung zur Spannung des Raupenbandes oder der Raupenkette auf, insbesondere wieder zwei Hydraulikzylinder. Hierdurch kann auch der Abstand der Zusatzachse zur Antriebsachse reduziert werden, so dass das Raupenband oder die Kette zum An- oder Abbau einfacher abgenommen werden kann. Dies gilt insbesondere, wenn die Halbraupe jeweils an einer Zwillingsbereifung geführt ist. Obwohl es möglich ist, die Raupenkette der Halbraupe durch Umgriffelemente an der Außenseite der Zwillingsbereifung zu führen, ist es bevorzugt, dass das Raupenband der Halbraupe zwischen den Reifen der Zwillingsbereifung geführt ist. Hierdurch ergibt sich eine besonders exakte Führung.

Für eine besonders hohe Traktion ist zudem zwischen den Reifen der Zwillingsbereifung ein Antriebsritzel (Turas) angeordnet ist, so dass sich ein formschlüssiger Eingriff in die Raupenkette ergibt, aber dennoch eine rasche Montage bzw. Demontage möglich ist. Hierzu ist auch die Zusatzachse für die Halbraupen mittels einer Konsole und Schnellverschlüssen am Hubwerk der Schildabstützung angebracht ist. Dabei ist es zudem vorteilhaft, dass das Halbraupen-Fahrwerk mit geringem Montageaufwand zum Reifenfahrwerk zurückgerüstet werden kann, beispielsweise im Sommer bei trockenen Bedingungen. Bei feuchterem Untergrund kann dann der Radbagger einfach und schnell mit dem Halbraupen-Fahrgestell nachgerüstet werden, insbesondere bei wechselnden Einsatzbedingungen, um so die Arbeitsmaschine ohne große Einschränkungen im Einsatz zu halten. Mancher Bauunternehmer, der einen Radbagger besitzt, kann somit auf einen Vollraupenbagger mit seinen Transportproblemen verzichten, aber nahezu alle entsprechenden Arbeiten durchführen.

Ein Ausführungsbeispiel der Erfindung ist in der Zeichnung dargestellt und wird im Folgenden näher bezeichnet. Hierbei zeigen
Fig. 1 einen Unterwagen eines Radbaggers mit erfindungsgemäßem Halbraupen-Fahrwerk in Draufsicht,
Fig. 2 eine Seitenansicht gemäß Fig. 2 auf eine Halbraupeneinheit.

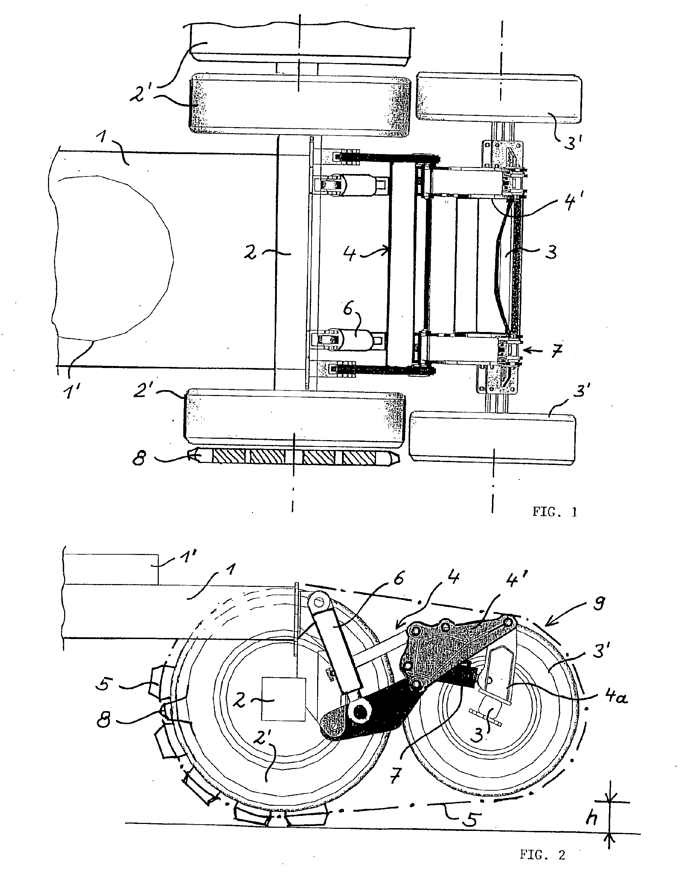

An einen Unterwagen 1 eines Radbaggers mit angedeutetem Drehkranz 1' ist eine der zwei üblichen Achsen dargestellt, hier die ungelenkte oder starre Achse 2 mit Zwillingsrädern 2'. Benachbart zur Achse 2 ist ein Hubwerk 4 befestigt, das üblicherweise zur sog. Schildanstützung dient. Das Schild ist hier durch eine Konsole 4' ersetzt, die ebenso wie die Längslenker des Hubwerks 5 mit einer stabilen Querstrebe ausgesteift sind. An der jeweiligen Konsole 4' ist je ein Schwenkarm 4a (vgl. Fig. 2) angelenkt, der mit einer Klemmverbindung eine Zusatzachse 3 trägt. Die Zusatzachse 3 ist somit parallel zur Achse 2 angeordnet, insbesondere mit der gleichen Spurweite. Im Prinzip kann die Zusatzachse 3 baugleich zur Achse 2 sein, jedoch ohne Antriebswellen. Die Räder 3' auf der Zusatzachse 3 können ebenso als Zwillingsräder ausgebildet sein. Bevorzugt sind die Räder 3' aber ohne Bereifung, um die Abstützwirkung starrer zu gestalten. Hierzu können als Räder 3' Laufradscheiben aus dem Panzerbau oder aus Vollketten-Fahrwerken verwendet werden, da diese in dem mit einer aufgelegten Raupenkette 5 (oder einem Raupenband 5 aus Hartgummi) gebildeten Halbraupen-Fahrwerk 9 nur als Umlenkräder dienen.

Das Hubwerk 4 besitzt hier zwei Hydraulikzylinder 6, bevorzugt mit Stickstoffspeichern, die über die Konsolen 4' und die Schwenkarme 4a (jeweils rechts und links) die Zusatzachse 3 heben bzw. ansenken. Der angehobene Zustand ist in Fig. 2 dargestellt, wobei sich für die Straßenfahrt ein Abstand h der Räder 3' und der darüber umlaufenden Raupenkette 5 (bzw. des Gummibandes) ergibt. Hierdurch wird die Raupenkette 5 bei Kurvenfahrt geschont, da die Laufpolster (hier nur teilweise am Rad 2' dargestellt) im wesentlichen nur mit der Aufstandsfläche des Rades 2' am Boden aufliegen.

Im abgesenkten Zustand des Hubwerks 4 drücken hingegen die Hydraulikzylinder 6 die Zusatzachse 3 mit den praktisch inkompressiblen Rädern 3' und Raupenketten 5 (bzw. Laufband 5) kräftig nach unten (ohne Abstand h), so dass sich eine große Abstützfläche ergibt. In Fig. 2 ist ein weiterer Hydraulikzylinder als Verstelleinrichtung 7 ersichtlich, die bzw. der bevorzugt geschützt in der Konsole 4' untergebracht ist und auf den Schwenkarm 4a wirkt. Somit kann die Raupenkette bzw. das Endlos-Laufband 5 gespannt werden. Zur Demontage des Halbraupen-Fahrwerks 9 kann die Verstelleinrichtung 7 verkürzt werden, so dass die Kette bzw. das Band 5 leichter von den Rädern 2' und 3' abgenommen werden kann. Hierzu ist ggf. das äußere Rad zu lösen, insbesondere wenn zwischen den Zwillingsrädern 2' ein Antriebsritzel 8 zum formschlüssigen Antrieb der Raupenkette 5 (bzw. deren Abbremsung oder Blockierung in Arbeitsposition) vorgesehen ist. Dieses Ritzel wird dann auch entfernt, da es je nach Kettenkonstruktion über den Reifendurchmesser hinausragen kann. Nach Wiederaufsetzen des äußeren Rades am Zwillingsrad 2' und Lösen der Konsole 4' an den Schnellanschlüssen des Hubwerks 4, womit die Zusatzachse 3 abgenommen werden kann, ist der Rückbau zu einem Radfahrwerk relativ rasch vollendet. Die Umrüstung des Radbaggers zu einem Halbraupen-Fahrzeug erfolgt dann in umgekehrter Reihenfolge ebenfalls relativ einfach.

## Patentansprüche

1. Selbstfahrende Arbeitsmaschine, insbesondere Radbagger, mit einem Unterwagen (1) und wenigstens zwei Achsen (2), wovon wenigstens eine lenkbar ist,
**dadurch gekennzeichnet, dass** mindestens eine Zusatzachse (3) benachbart zu einer der Achsen (2) unter Bildung wenigstens eines Halbraupen-Fahrwerks (9) vorgesehen ist.

2. Selbstfahrende Arbeitsmaschine nach Anspruch 1, **dadurch gekennzeichnet, dass** die Zusatzachse (3) parallel zur starren Achse (2) angeordnet ist.

3. Selbstfahrende Arbeitsmaschine nach Anspruch 1 oder 2, **dadurch gekennzeichnet, dass** die Zusatzachse (3) an einem Hubwerk (4) zur Schildabstützung angeordnet ist.

4. Selbstfahrende Arbeitsmaschine nach Anspruch 3, **dadurch gekennzeichnet, dass** die Zusatzachse (3) mit wenigstens einem in Höhenrichtung wirkenden Hydraulikzylinder (6), wobei in Fahrtposition das Halbraupen-Fahrwerk (9) im Wesentlichen auf die Aufstandsfläche der Räder (2') der Achse (2) reduziert ist.

5. Selbstfahrende Arbeitsmaschine nach einem der Ansprüche 1 bis 4, **dadurch gekennzeichnet, dass** das Halbraupen-Fahrwerk (9) eine Verstelleinrichtung (7) zur Spannung des Raupenbandes bzw. der Raupenkette (5) aufweist.

6. Selbstfahrende Arbeitsmaschine nach einem der Ansprüche 1 bis 5, **dadurch gekennzeichnet, dass** das Halbraupen-Fahrwerk (9) jeweils Zwillingsräder (2', 3') aufweist.

7. Selbstfahrende Arbeitsmaschine nach Anspruch 6, **dadurch gekennzeichnet, dass** zwischen den Zwillingsrädern (2') ein Antriebsritzel (8) angeordnet ist.

8. Selbstfahrende Arbeitsmaschine nach Anspruch 7, **dadurch gekennzeichnet, dass** die Raupenkette (5) an der Außenseite der Zwillingsräder (2', 3') geführt ist.

9. Selbstfahrende Arbeitsmaschine nach Anspruch 5 oder 6, **dadurch gekennzeichnet, dass** das Raupenband (5) zwischen den Reifen der Zwillingsräder (2', 3') geführt ist.

10. Selbstfahrende Arbeitsmaschine nach einem der Ansprüche 3 bis 9, **dadurch gekennzeichnet, dass** die Zusatzachse (3) mittels einer Konsole (4') am Hubwerk (4) angebracht ist.
